# EUROPÄISCHE PATENTANMELDUNG

(11) **EP 1 947 349 A1**
(43) Veröffentlichungstag der Anmeldung: **23.07.2008**
(21) Anmeldenummer: 07000815.6
(22) Anmeldetag: 16.01.2007
(51) Int. Cl.: F04D 29/60, F01D 5/28, F16M 7/00

(54) **Sicherungsmechanismus und Lagerelement**

(71) Anmelder: SIEMENS AKTIENGESELLSCHAFT, 80333 München (DE)
(72) Erfinder: Mikulec, Vinko, 47051 Duisburg (DE)

(57) **Zusammenfassung**

Die Erfindung betrifft einen Sicherungsmechanismus (1) mit einem ersten Bauteil (2), einem zweiten Bauteil (12) und einem dritten Bauteil (13), wobei das erste Bauteil (2) mit dem zweiten Bauteil (12) und dem dritten Bauteil (13) mittels jeweils einer ersten Gewindepaarung (40) miteinander im Eingriff steht und das zweite Bauteil (12) mit dem dritten Bauteil (13) mittels einer zweiten Gewindepaarung (50) miteinander im Eingriff steht, wobei die Gewinde der ersten Gewindepaarungen (40) und der zweiten Gewindepaarung (50) zueinander koaxial ausgebildet sind. Daneben betrifft die Erfindung ein Lagerelement (70) zur Abstützung einer Vorrichtung gegen einem Untergrund mit einer Längenverstellung (75) in einer Längserstreckung und ein Verfahren zur Montage des Sicherungsmechanismus (1) oder Lagerelementes.

Die Erfindung schlägt eine besonders sicher Vereinfachung des Standes der Technik vor, indem die Gewinde der ersten Gewindepaarungen (40) untereinander gleiche Gewindesteigungen und zu den Gewinden der zweiten Gewindepaarung (50) unterschiedliche Gewindesteigungen aufweisen.

Aufgrund der unterschiedlichen Gewindesteigungen wird eine spielfreie und rüttelsichere Konterung erreicht, die insbesondere gegen Zug- als auch Druckkräfte sichert.

## Beschreibung

Die Erfindung betrifft einen Sicherungsmechanismus mit einem ersten Bauteil, einem zweiten Bauteil und einem dritten Bauteil, wobei das erste Bauteil mit dem zweiten Bauteil und dem dritten Bauteil mittels jeweils einer ersten Gewindepaarung miteinander im Eingriff steht und das zweite Bauteil mit dem dritten Bauteil mittels einer zweiten Gewindepaarung miteinander im Eingriff steht, wobei die Gewinde der ersten Gewindepaarungen und der zweiten Gewindepaarung zueinander koaxial ausgebildet sind. Daneben betrifft die Erfindung ein Lagerelement zur Abstützung einer Vorrichtung gegen einem Untergrund mit einer Längenverstellung in einer Längserstreckung und ein Verfahren zur Montage des Sicherungsmechanismus oder Lagerelementes.

Bei der Lagerung von Bauteilen beispielsweise mit relativ großen Abmessungen und Gewichten werden Lagerelemente eingesetzt. Die bekannten Lagerelemente, beispielsweise Federbeineinheiten mit entsprechend großen Abmessungen, weisen nicht nur den Nachteil auf, dass diese extrem kostspielig und äußerst platzraubend sind, sondern auch, dass diese veränderliche Abstände, sowohl in horizontaler als auch insbesondere in vertikaler Richtung, die durch große Bauteilabmessungen und Gewichte, sowie aufgrund von Temperaturschwankungen (Umgebungstemperatur und/oder Betriebstemperatur) entstehen nicht oder nur mit erheblichem Aufwand kompensieren können, um die gewünschte Ausgangslage des jeweiligen zu lagernden Bauteils zu erhalten. Eine Veränderung der Lagerposition des zu lagernden Bauteils, beispielsweise eine Veränderung einer Mittenlage eines Rotors zu einem Stator (z.B. Gehäuse) kann zu erheblichen Spaltverlusten oder Verschleiß einzelner Komponenten, insbesondere des Rotors (z.B. Einbaukomponenten im Stator) führen. Diese Positionsveränderung kann im Vorfeld bei der Auslegung der einzelnen Komponenten zueinander eingerechnet werden, wobei beispielsweise aber von einem maximalen Spalt, also einem Abstand zusammenwirkender Komponenten des zu lagernden Bauteils ausgegangen wird. Insbesondere in Strömungsmaschinen, Getriebemaschinen oder dergleichen bewirken Spalte aber eine erhebliche Verminderung des möglicher Weise erreichbaren Wirkungsgrades.

Der Erfindung liegt daher die Aufgabe zugrunde, einen Sicherungsmechanismus der Eingangs genannten Art mit einfachen Mitteln dahingehend zu verbessern, dass die gewünschte Ausgangslage des zu lagernden Bauteils bei allen Betriebsbedingungen komplikationslos erhalten werden kann.

Erfindungsgemäß wird die Aufgabe durch die in den unabhängigen Ansprüchen definierte Merkmale des Sicherungsmechanismus bzw. des Lagerelementes und des Verfahrens zur Montage dieser Vorrichtungen gelöst. Die abhängigen Unteransprüche beinhalten jeweils vorteilhafte Weiterbildungen der Erfindung.

Das erste Bauteil kann beispielsweise eine Stütze bzw. ein Gewindebolzen sein. Die Stütze weist eine Kopfseite auf, der das zweite und das dritte Bauteil zugeordnet ist. Das zweite Bauteil kann beispielsweise als Anlageelement ausgeführt sein, wobei das dritte Bauteil vorteilhaft als Konterelement ausgeführt sein kann.

Aufgrund der unterschiedlichen Gewindesteigungen der beiden Außengewinde wird eine spielfreie und rüttelsichere aber lösbare und nachstellbare Konterung vorzugsweise des Anlageelementes erreicht. Die Konterung sichert insbesondere gegen Zug- als auch Druckkräfte.

Um zu erreichen, dass dem zu lagernden Bauteil eine genügende Auflagefläche zur Verfügung gestellt wird, ist es zweckmäßig im Sinne der Erfindung, wenn das Anlageelement bzw. das zweite Bauteil im Längsschnitt gesehen T-förmig mit einem Anlageflansch und einem senkrecht dazu angeordneten Schraubsteg ausgeführt ist, der das in seiner Gewindesteigung zum Außengewinde der Stütze unterschiedliche Außengewinde aufweist. Zum Verbinden des Anlageelementes mit der Stütze weist das Anlageelement günstiger Weise eine zentrale Gewindebohrung mit einem an das Außengewinde der Stütze korrespondierenden Innengewinde auf.

In bevorzugter Ausgestaltung ist das Konterelement bzw. das dritte Bauteil hülsenartig, und im Längsschnitt gesehen U-förmig mit einem Basissteg und senkrecht dazu angeordneten U-Stegen ausgeführt, die in Montageposition in Richtung zur Kopfseite der Stütze orientiert sind. Der Basissteg bildet somit vorteilhaft den Hülsenboden, wobei die U-Schenkel die in Umfangsrichtung bevorzugt durchgehende Hülsenwand bilden. Natürlich kann die Hülsenwand in Umfangsrichtung gesehen auch unterbrochen sein, so dass an dem Basissteg zumindest zwei sich gegenüberliegende Gewindestege (Innengewinde) angeordnet sind, die in Richtung zur Kopfseite orientiert sind. In zweckmäßiger Ausgestaltung weist das Konterelement in seinem Basissteg eine zentrale Gewindebohrung mit einem zu dem Außengewinde der Stütze korrespondierenden Innengewinde auf, wobei an den U-Schenkeln bzw. in der Hülsenwand vorteilhaft ein zum Außengewinde des Anlageelementes korrespondierendes Innengewinde vorgesehen ist.

Bei der Montage des Sicherungsmechanismus kann nun zunächst das Anlageelement mit dem Konterelement verbunden werden, indem das Konterelement mit dem Anlageelement über die einander korrespondierenden Gewinde (Außengewinde Anlageelement/Innengewinde Konterelement) verschraubt wird. Zur Fixierung der beiden Elemente untereinander ist in der Hülsenwand in zweckmäßiger Ausgestaltung zumindest eine Gewindebohrung zur Aufnahme eines Fixierelementes z.B. einer Madenschraube eingebracht.

Die beiden verbundenen Elemente bilden quasi ein einstückiges Bauteil, deren beiden Innengewinde (korrespondierend zum Außengewinde der Stütze bzw. des ersten Bauteils) quasi synchronisiert sind. Die beiden so verbundenen Elemente werden bevorzugt von der Kopfseite auf die Stütze aufgeschraubt, die fußseitig mit einer geeigneten Lagervorrichtung z.B. auf einem Fundament gelagert wird. Durch verdrehen der beiden miteinander fixierten Elemente in Richtung zum zu lagernden Bauteil gelangt der Anlageflansch des Anlageelementes in Anlagekontakt mit dem zu lagernden Bauteil, so dass dieses hinreichend gelagert ist. Das Fixierelement bzw. die Madenschraube wird dann gelöst, so dass das Konterelement relativ zum Einstellelement verdrehbar ist. Aufgrund der unterschiedlichen Gewindesteigungen der beiden Außengewinde zum einen der Stütze und zum anderen des Anlageelementes und folglich der unterschiedlichen Gewindesteigungen der beiden Innengewinde des Konterelementes wird so quasi eine Verklemmung des Konterelementes erreicht. Mittels dieser vorteilhaften Ausgestaltung ist insbesondere die Konterung des Anlageelementes gegen Zug- und auch gegen Druckkräfte gesichert, so dass sich dieses nicht unerwünscht lösen kann. Zur Fixierung der beiden Elemente zueinander kann anschließend das Fixierelement bzw. die Madenschraube festgedreht werden.

Das zu lagernde Bauteil kann somit auf der Auflagefläche des Anlageflansches aufliegen. Zur Verdrehsicherung des Anlageelementes ist zumindest eine Blindbohrung in dem Anlageelement vorgesehen, in die ein Hakenschlüssel oder ein anderes geeignetes Konterwerkzeug eingreifen kann. Natürlich können an beiden Stirnseiten des Anlageflansches entsprechende Blindbohrungen eingebracht sein. Denkbar ist aber auch, dass der Anlageflansch an seinem Außenumfang beispielsweise entsprechend einer Sechskantmutter ausgeführt ist, so dass zum Verstellen oder zur Verdrehsicherung ein Maulschlüssel oder dergleichen verwendet werden kann.

Ein weiterer Vorteil des erfindungsgemäßen Sicherungsmechanismus ist darin zu sehen, dass dieses jederzeit ohne großen Aufwand fein justierbar und/oder nachstellbar ist. Dabei muss lediglich die Stütze relativ zu den beiden miteinander verbundenen Elementen verdreht werden, nachdem das Konterelement aus einer Klemmlage gelöst wurde. Günstigerweise ist zum Verdrehen der Stütze ein Flansch mit einer Schlüsselfläche an der Stütze vorgesehen. Ist die gewünschte, fein justierte Lage erreicht, wird das Konterelement wieder in seine Klemmlage gebracht, und die Madenschraube fixiert. Denkbar ist aber auch, dass das Fixierelement bzw. die Madenschraube gelöst wird, das Konterelement aus der Klemmlage verdreht wird, und das Anlageelement verdreht wird. Anschließend wird das Konterelement wieder in seine Klemmlage überführt und mit dem Fixierelement bzw. der Madenschraube fixiert.

Insgesamt wird somit ein fein justierbarer und nachstellbarer fester Abstandhalter bzw. ein Lagerelement für ein zu lagerndes Bauteil zur Verfügung gestellt. In vorteilhafter Ausgestaltung kann der Stütze fußseitig ein Kraftspeicher zugeordnet sein, so dass mittels dieser vorteilhaften Kombination eine kompakte und preiswerte Bauweise als Ersatz für kostspielige und platzraubende Federbeineinheiten zur Verfügung gestellt wird.

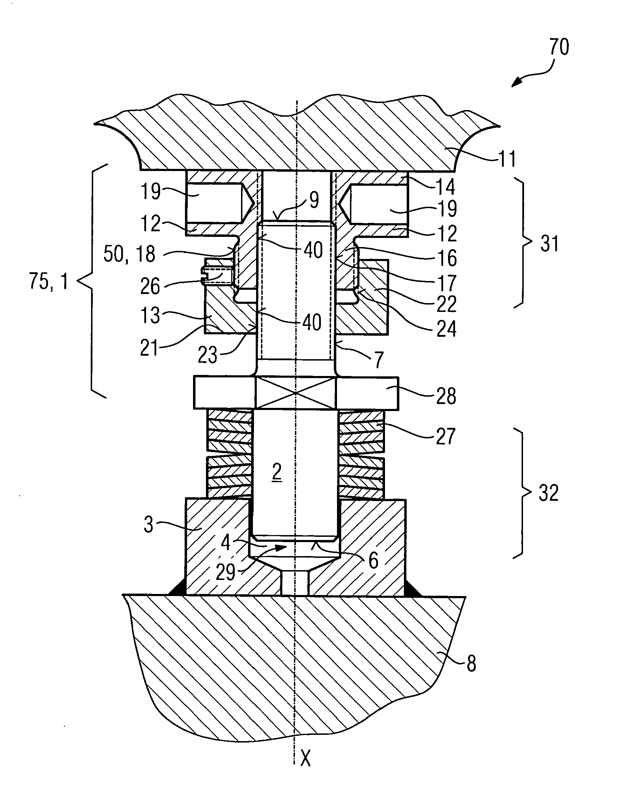

Weiter vorteilhafte Ausgestaltungen der Erfindung sind in den Unteransprüchen und der folgenden Figurenbeschreibung offenbart. Es zeigt die einzige
- Fig. 1: einen Längsschnitt durch ein erfindungsgemäßes Lagerelement.

Figur 1 zeigt ein Lagerelement 70 mit einem Sicherungsmechanismus 1 in einem Längsschnitt. Der Sicherungsmechanismus 1 ist hierbei als Längenverstellung 75 des Lagerelementes 70 ausgebildet, welches in seiner Längserstreckung verkürzt und verlängert werden kann. Der Sicherungsmechanismus 1 weist ein erstes Bauteil 2 auf, das in dem dargestellten Ausführungsbeispiel als Gewindebolzen ausgeführt ist, und im Folgenden als Stütze 2 bezeichnet wird. Die Stütze 2 ist fußseitig standsicher gelagert. Hierzu ist ein Standelement 3 vorgesehen, welches eine an die Stütze 2 angepasste Bohrung 4 aufweist. Die Bohrung 4 kann ein Innengewinde aufweisen, welches an ein an der Fußseite 6 bzw. an der Stütze 2 angeordneten Außengewinde 7 angepasst ist. Die Bohrung 4 ist bevorzugt ohne Innengewinde ausgeführt, so dass die Stütze 2 fußseitig in die Bohrung 4 einsteckbar und hinreichend gehalten ist. Das Außengewinde 7 ist dann nicht durchgängig an der Stütze 2, sondern lediglich in einem geeigneten Gewindeabschnitt 31 angeordnet, worauf weiter unten näher eingegangen wird.

Das Standelement 3 ist hinreichend mit einem Fundament 8 verbunden. In dem dargestellten Ausführungsbeispiel ist das Standelement 3 mit dem Fundament 8 stoffschlüssig verbunden, bevorzugt verschweißt.

An seiner zur Fußseite 6 gegenüberliegenden Kopfseite 9 trägt die Stütze 2 ein zu lagerndes Bauteil 11.

Der Kopfseite 9 ist ein zweites Bauteil 12, das im Folgenden als Anlageelement 12 bezeichnet wird, und ein drittes Bauteil 13, das im Folgenden als Konterelement 13 bezeichnet wird, zugeordnet.

Das erste Bauteil 2 steht mit dem zweiten Bauteil 12 und dem dritten Bauteil 13 mittels jeweils einer ersten Gewindepaarung 40 miteinander im Eingriff. Das zweite Bauteil 12 steht mit dem dritten Bauteil 13 mittels einer zweiten Gewindepaarung 50 im Eingriff. Die Gewinde der ersten Gewindepaarung 40 und der zweiten Gewindepaarung 50 sind zueinander koaxial ausgebildet und weisen unterschiedliche Gewindesteigungen auf.

Das Anlageelement 12 ist in dem dargestellten Ausführungsbeispiel T-förmig mit einem Anlageflansch 14 und einem senkrecht dazu angeordneten Schraubsteg 16 ausgeführt. In dem Anlageelement 12 ist eine zentrale Gewindebohrung mit einem an das Außengewinde 7 der Stütze 2 angepassten Innengewinde 17 eingebracht. Die Gewindebohrung ist bevorzugt durchgängig in dem Anlageelement 12 eingebracht. Der Schraubsteg 16 weist an seinem Außenumfang ein Außengewinde 18 auf, das vorteilhaft eine zum Außengewinde 7 der Stütze 2 unterschiedliche Gewindesteigung aufweist.

In dem Anlageflansch 14 sind im Längsschnitt gesehen jeweils stirnseitig gegenüberliegend zwei Bildbohrungen 19 eingebracht, in die ein geeignetes Werkzeug, z.B. ein Hakenschlüssel eingreifen kann.

Das Konterelement 13 ist im Längsschnitt gesehen U-förmig mit einem Basissteg 21 und zwei senkrecht dazu angeordneten U-Schenkeln 22 ausgeführt. Die U-Schenkel 22 sind in Richtung zur Kopfseite 9 orientiert. In dem Basissteg 21 ist eine zentrale Gewindebohrung mit einem an das Außengewinde 7 der Stütze 2 angepassten Innengewinde 23 eingebracht. An seinen U-Schenkeln 22 weist das Konterelement 13 ein zum Außengewinde 18 des Anlageelementes 12 bzw. seines Schraubsteges 16 korrespondierendes Innengewinde 24 auf.

Das Konterelement 13 ist in dem dargestellten Ausführungsbeispiel als Hülse ausgeführt, deren Hülsenboden durch den Basissteg 21 und deren Hülsenwand durch die im Längsschnitt erkennbaren U-Stege 22 gebildet ist. Die Hülsenwand kann in Umfangsrichtung gesehen durchlaufend oder unterbrochen sein, so dass zumindest zwei sich bezogen auf die Mittelachse X gegenüberliegende Gewindestege gebildet sind, welche die im Längsschnitt dargestellten zwei U-Schenkel 22 bilden können.

In der Hülsenwand bzw. in einer der im Längsschnitt dargestellten beiden U-Schenkel 22 ist eine Gewindebohrung mit Innengewinde zur Aufnahme eines Fixierelementes 26 beispielsweise einer Madenschraube eingebracht, um die beiden Elemente 12 und 13 miteinander zu fixieren.

In seinem Fußbereich ist der Stütze 2 in dem dargestellten Ausführungsbeispiel ein Kraftspeicher 27 zugeordnet. Der Kraftspeicher 27 ist als Tellerfederpaket ausgeführt, welches einerseits an dem Standelement 3 und andererseits an einem Flansch 28 anliegt. Der Flansch 28 kann ein zum Außengewinde 7 des Tragelementes 2 korrespondierendes Innengewinde aufweisen, und kann somit zur Einstellung einer Federvorspannung entlang der Mittelachse X verdrehbar sein. In dem dargestellten, bevorzugten Ausführungsbeispiel sind der Flansch 28 und die Stütze 2 einteilig ausgeführt bzw. hergestellt, wobei der Flansch 28 eine Schlüsselfläche aufweist.

Bei der Montage des Sicherungsmechanismus 1 wird zunächst das Konterelement 13 mit dem Einstellelement 12 verschraubt, indem die beiden Gewinde (Außengewinde 18 des Anlageelements 12; Innengewinde 23 des Konterelementes 13) miteinander in Eingriff gebracht werden. Damit sind beide Elemente 12 und 13 quasi zu einem einstückigen Bauteil mit einem synchronisierten Innengewinde zusammengefasst. Mittels des Fixierelementes 26 bzw. der Madenschraube werden die beiden Elemente 12 und 13 in ihrer relativen Lage zueinander fixiert.

Die beiden miteinander verbundenen Elemente 12 und 13 werden von der Kopfseite 9 in Richtung zur Fußseite 6 gemeinsam auf die Stütze 2 aufgeschraubt. Der Kraftspeicher 27 wird fußseitig um die Stütze 2 gelegt. Anschließend wird der so zusammengesetzte Sicherungsmechanismus 1 in das Standelement 3 eingesetzt.

Die Stütze 2 wird derart in das Standelement 3 bzw. in die Bohrung 4 eingesetzt, dass ein Bewegungsraum 29 für das Lagerelement 1 bzw. sein Tragelement 2 gebildet ist, so dass dieses in axialer Richtung gesehen, also entlang seiner Mittelachse X beweglich gelagert ist. Das Außengewinde 7 ist dabei nicht durchgängig, also von der Kopfseite 9 bis zur Fußseite 6 an der Stütze 2 angeordnet, sondern endet ausgehend von der Kopfseite 9 vor der Fußseite 6, so dass der Gewindeabschnitt 31 gebildet ist. Der Gewindeabschnitt 31 erstreckt sich derart, dass ein genügender Bewegungsabschnitt 32 der Stütze 2 zur Verfügung steht, so dass die Stütze 2 in der Bohrung 4 axial beweglich gehalten ist.

In der bevorzugt einteiligen Ausgestaltung des Flansches 28 und der Stütze 2 wird der Sicherungsmechanismus 1 mit der Stütze 2 in das Standelement 3 wie zuvor beschrieben beweglich eingesetzt.

Ist eine Beweglichkeit der Stütze 2 in dem Standelement 3 nicht erforderlich, kann die Stütze 2 in das Standelement 3 bzw. in dessen Bohrung 4 eingeschraubt oder mit anderen geeigneten Verbindungsarten mit diesem verbunden werden, wobei dann aber auf den Kraftspeicher 27 verzichtet werden kann. Das Außengewinde kann dann vorteilhaft durchgängig von der Kopfseite 9 bis zur Fußseite 6 an der Stütze 2 angeordnet sein.

Das Anlageelement 12 wird zusammen mit dem Konterelement 13 entlang der Mittelachse X z.B. unter Zuhilfenahme des geeigneten Werkzeugs (z.B. Hakenschlüssel) in Richtung zum zu lagernden Bauteil 11 geschraubt, bis das Einstellelement 12 mit seiner Anlagefläche an dem zu lagernden Bauteil 11 ausreichend anliegt. Durch verdrehen der Stütze 2 relativ zum Anlageelement 12 und dem damit verbundenen Konterelement 13 kann die gewünschte Lage fein eingestellt werden. Das Fixierelement 26 bzw. die Madenschraube wird gelöst, so dass das Konterelement 13 relativ zum Einstellelement 12 verdreht werden und quasi in eine Klemmlage überführt werden kann. Dies wird durch die beiden unterschiedlichen Gewindesteigungen der beiden Außengewinde 7 und 18 und der entsprechenden Innengewinde 23 und 24 erreicht.

Hat das Konterelement 13 seine Konterlage bzw. Klemmlage erreicht, wird das Fixierelement 26 bzw. die Madenschraube festgeschraubt, so dass beide Elemente 12 und 13 wieder gegeneinander fixiert sind. Somit wird eine spielfreie und rüttelsichere aber lösbare und nachstellbare Konterung ermöglicht.

Im Falle eines erforderlichen Nachstellens bzw. Nachjustierens des Sicherungsmechanismus 1 relativ zum zu lagernden Bauteil 11 wird das Fixierelement 26 bzw. die Madenschraube gelöst und das Konterelement 13 aus seiner Klemmlage herausgedreht. Durch verdrehen der Stütze 2 kann dann eine fein justierte Nacheinstellung erfolgen, in dem mit einem geeigneten Werkzeug an dem Flansch 28 bzw. an seiner Schlüsselfläche angegriffen wird, und das Anlageelement 12 erforderlichen falls verdrehsicher gehalten wird, indem der beispielhafte Hakenschlüsseln in die Blindbohrung 19 konternd eingreift. Anschließend wird das Konterelement 13 wieder in seine Klemmlage überführt und die Madenschraube festgezogen. Möglich ist aber auch, dass nach einem Lösen der Klemmlage des Konterelementes 13 das Anlageelement 12 verdreht wird, um eine fein justierte Nacheinstellung zu erreichen.

Insgesamt wird mittels des erfindungsgemäßen Sicherungsmechanismus 1 ein fein justierbarer und nachstellbarer Abstandhalter der auch als Lagerelement bezeichnet werden kann zur Verfügung gestellt. In Kombination mit dem beispielhaft genannten Kraftspeicher 27 wird eine kompakte und preiswerte Bauweise als Ersatz für kostenintensive und platzraubende Federbeineinheiten zur Verfügung gestellt.

### Bezugszeichenliste

- 1.: Sicherungsmechanismus
- 2.: erstes Bauteil/Stütze
- 3.: Standelement
- 4.: Bohrung in 3
- 6.: Fußseite v. 2
- 7.: Außengewinde v. 2
- 8.: Fundament
- 9.: Kopfseite
- 11.: zu lagerndes Bauteil
- 12.: zweites Bauteil/Anlageelement
- 13.: drittes Bauteil/Konterelement
- 14.: Anlageflansch
- 16.: Schraubsteg
- 17.: Innengewinde v. 12
- 18.: Außengewinde v. 12 bzw. 16
- 19.: Bildbohrung

- 21.: Basissteg
- 22.: U-Schenkel
- 23.: Innengewinde v. 13
- 24.: Innengewinde von 13 bzw. 22
- 26.: Fixierelement
- 27.: Kraftspeicher
- 28.: Flansch
- 29.: Bewegungsraum

- 31.: Gewindeabschnitt
- 32.: Bewegungsabschnitt
- 40.: erste Gewindepaarung
- 50.: zweite Gewindepaarung
- 70.: Lagerelement
- 75.: Längenverstellung

## Patentansprüche

1. Sicherungsmechanismus (1) mit einem ersten Bauteil (2), einem zweiten Bauteil (12) und einem dritten Bauteil (13), wobei das erste Bauteil (2) mit dem zweiten Bauteil (12) und dem dritten Bauteil (13) mittels jeweils einer ersten Gewindepaarung (40) miteinander im Eingriff steht und das zweite Bauteil (12) mit dem dritten Bauteil (13) mittels einer zweiten Gewindepaarung (50) miteinander im Eingriff steht, wobei die Gewinde der ersten Gewindepaarungen (40) und zweiten Gewindepaarung (50) zueinander koaxial ausgebildet sind,
**dadurch gekennzeichnet, dass**
die Gewinde der ersten Gewindepaarungen (40) untereinander gleiche Gewindesteigungen und zu den Gewinden der zweiten Gewindepaarung (50) unterschiedliche Gewindesteigungen aufweisen.

2. Sicherungsmechanismus (1) nach Anspruch 1,
**dadurch gekennzeichnet, dass**
das Gewinde der ersten Gewindepaarung (40) an dem ersten Bauteil (2) als Außengewinde (7) ausgebildet ist.

3. Sicherungsmechanismus (1) nach Anspruch 1,
**dadurch gekennzeichnet, dass**
das Gewinde der ersten Gewindepaarung (40) an dem zweiten Bauteil (12) als Innengewinde (17) und das Gewinde der zweiten Gewindepaarung (50) an dem zweiten Bauteil (12) als Außengewinde (18) ausgebildet ist.

4. Sicherungsmechanismus (1) nach Anspruch 1,
**dadurch gekennzeichnet, dass**
Gewinde der ersten Gewindepaarung (40) an dem dritten Bauteil (13) als Innengewinde (23) und das Gewinde der zweiten Gewindepaarung (50) an dem dritten Bauteil (12) als Innengewinde (24) ausgebildet ist.

5. Sicherungsmechanismus (1) nach Anspruch 1,
**dadurch gekennzeichnet, dass** das zweite Bauteil (12) im Längsschnitt gesehen T-förmig mit einem Anlageflansch (14) und einem senkrecht dazu angeordneten Schraubsteg (16), der das Außengewinde der zweiten Gewindepaarung (50) trägt, ausgeführt ist.

6. Sicherungsmechanismus (1) nach einem der vorhergehenden Ansprüche,
**dadurch gekennzeichnet, dass**
das zweite Bauteil (12) zumindest eine Ausnehmung (Blindbohrung (19)) oder eine Schlüsselfläche zur Sicherung gegen Verdrehen mittels eines Werkzeuges aufweist.

7. Sicherungsmechanismus (1) nach dem vorhergehenden Anspruch,
**dadurch gekennzeichnet, dass**
das zweite Bauteil (12) zumindest eine Blindbohrung (19) zum Einstecken einer Verdrehsicherung aufweist.

8. Sicherungsmechanismus (1) nach einem der vorhergehenden Ansprüche,
**dadurch gekennzeichnet, dass**
das dritte Bauteil (13) hülsenartig, und im Längsschnitt gesehen U-förmig mit einem Basissteg (21) und zwei U-Schenkeln (22) ausgeführt ist, wobei die U-Schenkel (22) in Montageposition in Richtung zu einer Kopfseite (9) des ersten Bauteils (2) orientiert sind.

9. Sicherungsmechanismus (1) nach einem der vorhergehenden Ansprüche,
**dadurch gekennzeichnet, dass**
das dritte Bauteil (13) in seinem Basissteg (21) eine Gewindebohrung mit einem zum Außengewinde (7) des ersten Bauteils (2) korrespondierenden Innengewinde (23) aufweist.

10. Sicherungsmechanismus (1) nach einem der vorhergehenden Ansprüche,
**dadurch gekennzeichnet, dass**
das dritte Bauteil (13) ein zum Außengewinde (18) des zweiten Bauteils (12) korrespondierendes Innengewinde (24) aufweist.

11. Sicherungsmechanismus (1) nach einem der vorhergehenden Ansprüche,
**dadurch gekennzeichnet, dass**
das dritte Bauteil (13) zumindest eine Gewindebohrung zur Aufnahme eines Fixierelementes (26) aufweist, mittels dessen die Relativposition des zweiten Bauteils (12) zu dem dritten Bauteil (13) sicherbar ist.

12. Lagerelement (70) zur Abstützung einer Vorrichtung gegen einen Untergrund mit einer Längenverstellung (75) in einer Längserstreckung,
**dadurch gekennzeichnet, dass**
die Längenverstellung (75) einen Sicherungsmechanismus (1) nach einem der vorhergehenden Ansprüche aufweist, wobei das erste Bauteil (2) an einem ersten Längsende des Lagerelementes und das zweite Bauteil (12) an einem zweiten Längsende des Lagerelementes (70) angeordnet ist und eine Relativverdrehung dieser beiden Bauteile eine Längenänderung des Lagerelementes (70) bewirkt.

13. Lagerelement (70) nach Anspruch 12,
**dadurch gekennzeichnet, dass** dem ersten Bauteil (2) oder dem zweiten Bauteil (12) ein Kraftspeicher (27) zugeordnet ist, welcher derart ausgebildet ist, dass er in Längsrichtung des Lagerelementes (70) eine Vorspannkraft der Abstützung erzeugt.

14. Verfahren zur Montage eines Sicherungsmechanismus (1) oder Lagerelementes (70) nach einem der vorhergehenden Ansprüche,
**dadurch gekennzeichnet, dass**
in einem ersten Schritt die Gewinde des zweiten Bauteils (12) und dritten Bauteils (13) der zweiten Gewindepaarung (50) zumindest zum Teil miteinander verschraubt werden und diese Bauteile (12, 13) zueinander in eine derartige synchronisierende Verdrehposition gebracht werden, dass die Gewinde dieser beiden Bauteile (12, 13), die jeweils zu der ersten Gewindepaarung (40) gehören, zueinander in einer derartigen Position stehen, dass das Gewinde der ersten Gewindepaarung (40) des ersten Bauteils (2) mit denen des zweiten (12) und dritten Bauteils (13) verschraubt werden können,
in einem zweiten Schritt die Gewinde der ersten Gewindepaarung (40) des zweiten (12) und dritten Bauteils (13) mit demjenigen des ersten Bauteils (2) verschraubt werden,
in einem dritten Schritt zur Sicherung des Sicherungsmechanismus (1) das dritte Bauteil (13) gegen das zweite Bauteil (12) und das erste Bauteil (2) verdreht wird.

15. Verfahren nach Anspruch 14,
**dadurch gekennzeichnet, dass**
in dem ersten Schritt nach Herstellung der synchronisierenden Verdrehposition eine Sicherung der Relativposition des zweiten Bauteils (12) zu dem dritten Bauteil (13) erfolgt.
